# EUROPEAN PATENT SPECIFICATION

(11) **EP 4 390 020 B1**
(45) Date of publication and mention of the grant of the patent: **10.06.2026**
(21) Application number: 22214722.5
(22) Date of filing: 19.12.2022
(51) Int. Cl.: E05B 81/76, E05B 17/10, E05B 79/06, E05B 85/10

(54) **ASSEMBLY FOR OPENING AND/OR CLOSING A VEHICLE DOOR**
ANORDNUNG ZUM ÖFFNEN UND/ODER SCHLIESSEN EINER FAHRZEUGTÜR
ENSEMBLE D'OUVERTURE ET/OU DE FERMETURE D'UNE PORTE DE VÉHICULE

(43) Date of publication of application: 26.06.2024
(73) Proprietor: MINEBEA ACCESSSOLUTIONS ITALIA S.P.A., 10044 Pianezza (IT)
(72) Inventor: GUERIN, Anthony, 10044 Pianezza (IT); FRATTINI, Massimo, 10044 Pianezza (IT); VIETTI, Andrea, 10044 Pianezza (IT)
(74) Representative: Germain Maureau

(56) References cited:
- JP-A- 2007 001 524
- US-A1- 2016 042 889
- US-A1- 2022 213 722

## Description

### Technical field

The present invention relates to an assembly for opening and/or closing a vehicle door, a vehicle door comprising said assembly and a method of mounting said assembly on a vehicle door.

### Background

Electronic assemblies for opening and/or closing a vehicle door generally comprise a handle and electronic means configured to unlock the vehicle door and to activate a latch, such as an electronic latch, to open the vehicle door.

As a matter of fact, nowadays, door system are becoming more and more electrical. It means that the handle can have no more mechanical connection to the latch to release it and this function is realized by an electrical signal. To generate this electrical signal from the handle different solutions can be used as switches or sensors. The most common solution used involve a mechanical switch.

It is known for example to arrange such a mechanical switch on an external side of the vehicle door, near the window of the vehicle door. Once touch by a user's hand, the mechanical switch activate an electronic latch causing the vehicle door to unlatch and open.

However, there is a risk to open the door from the inside of the vehicle door when the user is driving, for example if the user inadvertently puts his hand on the mechanical switch when the window is open.

### Summary of the invention

An object of the invention is to overcome this problem. An object of the invention is to provide for an opening through a switch that is not easily reachable from the inside of the vehicle when the user is driving.

The invention concerns an assembly for opening and/or closing a vehicle door the assembly comprising :
a grip member configured to be attached to an external side of a vehicle door, the grip member comprising:
a base configured to extend from the vehicle door, for example the external side of the vehicle door, when the grip member is attached to the external side of the vehicle door,
a gripping part extending from the base, and toward an upper direction when the grip member is attached to the external side of the vehicle door,
an electronic switch subassembly configured to be attached the grip member and configured to be activated by a user's touch so as to send a signal to an electronic latch to open the door, the electronic switch subassembly comprising a switch contact area, facing downwards when the grip member is attached to the external side of the vehicle door.

Due to the switch contact area arranged so as to face downwards when the grip member is attached to the external side of the vehicle door, the switch contact area is not easily reachable from the inside of the vehicle when the user is driving.

The gripping part comprises a traction surface configured to allow exerting a traction on the grip member so as to pull on the vehicle door, the traction surface facing the vehicle door when the grip member is attached to the external side of the vehicle door and wherein the assembly is arranged so that, a thumb of user's hand can touch the switch contact area while one or more other fingers of the user's same hand are touching the traction surface at the same time.

The assembly for opening and/or closing a vehicle door according to claim 1 can further comprise the following features.

The assembly comprises a light source subassembly comprising a light source arranged so that at least part of the light source faces away from the vehicle door when the grip member is attached to the external side of the vehicle door.

The light source subassembly comprises a window part that is at least partially transparent, for example transparent, to the light emitted by the light source, the window part being arranged on the base and/or on a lower part of the grip member.

The electronic switch subassembly comprises at least two switch elements, each switch element comprising one or more switch(es), the switch elements being arranged at different positions with respect to the switch contact area so that a user's touch on the switch contact area activates at least one of the switches.

Each switch element comprises a first switch and a second switch,, the switch subassembly being activated when:
at least one of the first switches is activated and
at least one of the second switches is activated.

The first switches and the second switches are configured such that the output signal sent by of each of the output signals of the first switches when activated is inverted with respect to the output signal sent by each of the second switches when activated.

The electric switch subassembly comprises a first electrical subcircuit connecting the first switches together, and a second electrical subcircuit connecting the second switch elements together, the first electrical subcircuit being distinct from the second electrical subcircuit.

The grip member comprises for each switch element, a corresponding contact subcircuit allowing activation of the one or more switch(es) of the switch element by a user's touch on the switch contact are.

The assembly comprises a frame configured to cooperate with the switch contact area so as to define an inner space wherein at least two switch elements are arranged.

The assembly comprises a frame configured to cooperate with the switch contact area so as to define an inner space wherein the printed circuit board assembly is arranged.

The frame is fixed to the grip member and wherein a contact zone between the frame and the grip member is sealed by laser welding to form a waterproof seal.

The assembly comprises a fixation element configured to be attached to the vehicle door, wherein an aperture is arranged in the fixation element so as to allow access to the switch contact area by the user's hand thumb.

According to a further aspect, the invention concerns a vehicle door comprising the assembly for opening and/or closing a vehicle door as previously described, and a belt line from which can extend a window glass.

For example, the grip member is attached to an external side of the vehicle door, at the belt line.

According to a further aspect, the invention concerns a method of mounting said assembly on a vehicle door the method comprising:
assembling the electronic switch subassembly to the grip member,
arranging at least a part of the assembled electronic switch subassembly and grip member in the aperture of the fixation element, and
attaching the fixation element to the vehicle door .

### Brief description of the drawings

Figure 1 shows an exploded view of an assembly for opening and/or closing a vehicle door according to an example of embodiment of the invention.
Figure 2 shows a vehicle door comprising the assembly for opening and/or closing a vehicle door according to an example of embodiment of the invention.
Figure 3 shows the assembly for opening and/or closing a vehicle door according to an example of embodiment of the invention.
Figure 4 shows the assembly for opening and/or closing a vehicle door according to an example of embodiment of the invention.
Figure 5 shows the assembly for opening and/or closing a vehicle door according to an example of embodiment of the invention.
Figure 6 shows a lower face of a printed circuit board according to an example of the invention.

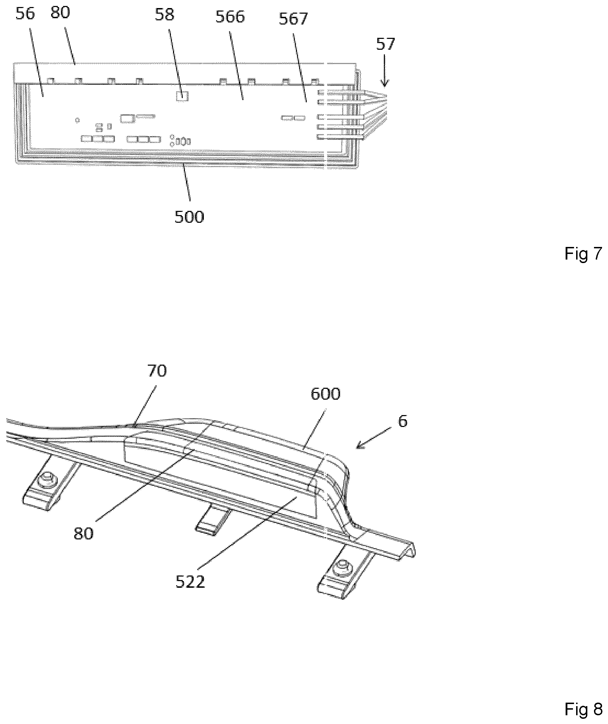

Figure 7 shows an upper face of a printed circuit board according to an example of the invention.
Figure 8 shows a grip member and an electronic switch subassembly mounted on a fixation element of the assembly according to an example of the invention.
Figure 9 shows an exploded view of the grip member, the electronic switch subassembly and the fixation element of the assembly according to an example of the invention.
Figure 10 shows an electronic switch subassembly and a light source subassembly according to an embodiment of the invention.
Figure 11 shows an electronic switch subassembly and a light source subassembly according to the embodiment of the invention.
Figure 12 shows an electronic switch subassembly and a light source subassembly according to the embodiment of the invention.
Figure 13 shows a step of a method of mounting the assembly on a vehicle door according to a first embodiment of the invention.
Figure 14 shows a step of a method of mounting the assembly on a vehicle door according to the embodiment of the invention.
Figure 15 shows a step of a method of mounting the assembly on a vehicle door according to a first variant of the first embodiment of the invention.
Figure 16 shows a step of a method of mounting the assembly on a vehicle door according to a second variant of the first embodiment of the invention.
Figure 17 shows a step of a method of mounting the assembly on a vehicle door according to a second embodiment of the invention.
Figure 18 shows a step of a method of mounting the assembly on a vehicle door according to the embodiment of the invention.
Figure 19 shows a step of a method of mounting the assembly on a vehicle door according to a first variant of the second embodiment of the invention.
Figure 20 shows a step of a method of mounting the assembly on a vehicle door according to a second variant of the second embodiment of the invention.

### Description of the embodiments

### Assembly

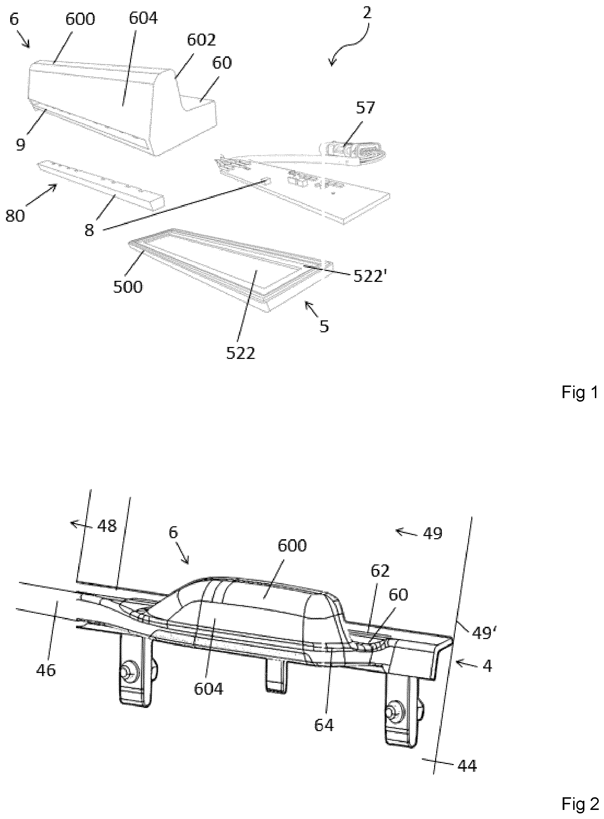

Figure 1 illustrates an assembly 2 for opening and/or closing a vehicle door according to the invention.

The assembly 2 comprises a grip member 6 configured to be attached to a vehicle door 4, for example an external side 44 of the vehicle door 4 (figure 2) and an electronic switch subassembly 5 configured to be activated by a user's touch so as to send a signal to an electronic latch (not shown) to open the vehicle door 4.

The vehicle door 4 is for example a lateral door of the vehicle or the trunk door.

### Grip member

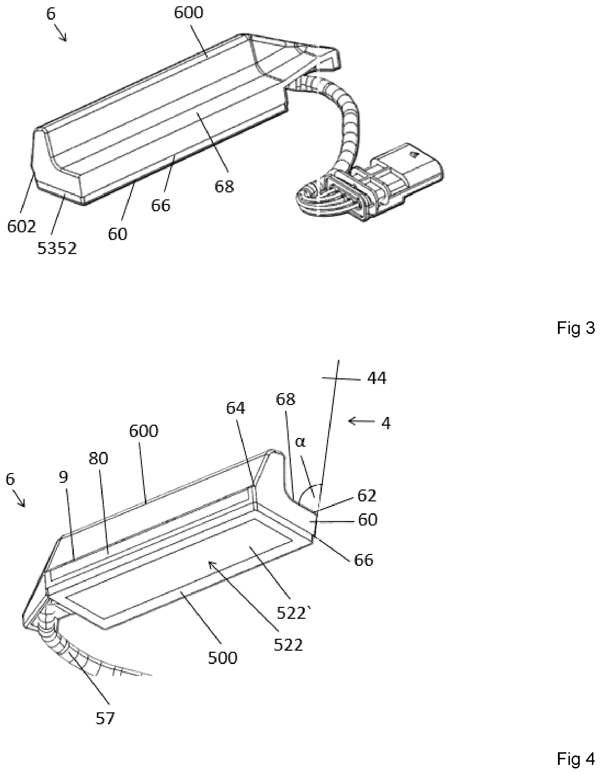

Figure 3 illustrates the grip member 6 according to the invention.

The grip member 6 is configured to be arranged at a belt line 46 of the vehicle door 4, from which can extend a window glass 48 for example (figure 2).

The grip member 6 is dimensioned so as to be graspable by the user's hand.

The grip member 6 is dimensioned so as to allow exerting a traction on the grip member 6 so as to pull on the vehicle door 4 to open the vehicle door 4, when the grip member is attached to the vehicle door. The grip member 6 is further dimensioned so as to allow exerting a pressure on the grip member 6 so as to push on the vehicle door 4 to close the vehicle door 4, when the grip member is attached to the vehicle door.

The grip member 6 comprises a base 60 configured to extend from the vehicle door 4, for example the external side 44 of the vehicle door, when the grip member 6 is attached to the vehicle door 4, for example to the external side 44 of the vehicle door 4 as illustrated in figure 3.

For example, the base 60 can extend at an angle "α" (figure 4) comprised between 70° and 110° with respect to the external side 44 of the vehicle door 4.

For example, the base 60 can extend at an angle "α" of 90° (figure 4) with respect to the external side 44 of the vehicle door 4.

For example, the base 60 can extend perpendicularly with respect to the external side 44 of the vehicle door.

The grip member 6 comprises a gripping part 600 extending from the base 60. The gripping part 600 is intended to be grasped by the user's hand.

The gripping part 600 is configured to extend from the base 60 toward an upper direction when the grip member 6 is attached to the external side of the vehicle door.

For example, the gripping part 600 extends at an angle comprised between 70 and 110° with respect to the base of the grip member.

For example, the gripping part 600 extends at an angle of 90° with respect to the base of the grip member.

For example, the gripping part 600 can extend perpendicularly with respect to the base 60 of the grip member.

For example, the gripping part 600 can extend with respect to the base 60 so that the grip member 6 has a "L-shape".

For example the grip member 6 is a "L-shape" grip member 6.

The base 60 can comprises a first edge 62 proximal to the vehicle door when the grip member 6 is attached to the vehicle door, and an opposite second edge 64, distal to the vehicle door when the grip member 6 is attached to the vehicle door.

For example the gripping part 600 extends from the distal edge 64 of the base 60.

This configuration permits to the gripping part 600 to extend away from the vehicle door 4.

For example, the gripping part 600 can comprise a traction surface 602 configured to allow exerting a traction on the grip member 6 so as to pull on the vehicle door 4.

For example the traction surface 602 (figure 1) is configured to be disposed facing the vehicle door when the grip member is attached to the external side of the vehicle door.

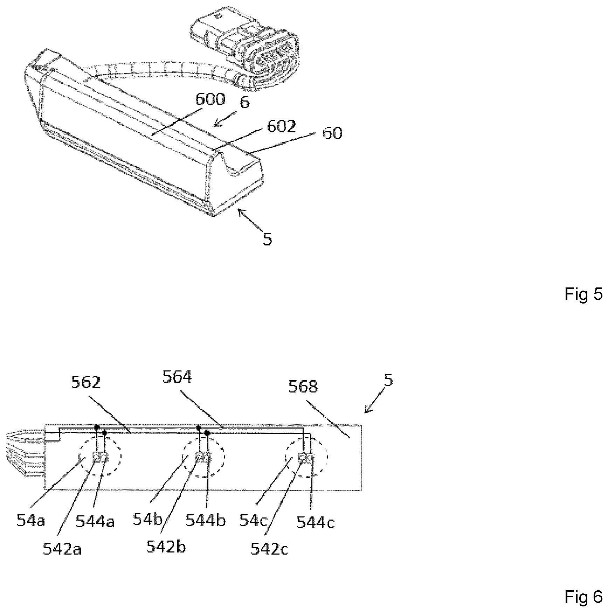

For example, the gripping part 600 can comprise a pressure surface 604 (figure 3) configured to allow exerting a pressure on the grip member 6 so as to push on the vehicle door (figure 5).

For example the pressure surface 604 is arranged opposite to the traction surface 602.

The base 60 and the gripping part 600 can be formed in one piece, for example the base 60 and the gripping part 600 form a single piece.

### electronic switch subassembly

The electronic switch subassembly 5 is configured to be activated by a user's touch so as to send a signal to an electronic latch (not shown) to open the vehicle door.

According to the invention, the electronic switch subassembly 5 is attached to the grip member 6 (figure 4).

The electric switch subassembly 5 comprises a switch contact area 522 (fig.3).

The switch contact area 522 is configured so as to be touch by a user's thumb when the grip member is attached to the vehicle door (fig. 5).

According to the invention, the switch contact area 522is facing downwards when the grip member 6 is attached to the external side 44 of the vehicle door.

For example, the switch contact area 522 extends along a surface of the grip member 6 facing downwards when the grip member 6 is attached to the external side of the vehicle door (fig. 2).

For example, the switch contact area 522 extends along a surface 66 of the base 60 and/or a surface of a lower part of the gripping part 60 facing downwards when the grip member is attached to the external side of the vehicle door.

For example, the switch contact area 522 extends along a first surface 66 of the base 60, opposite to a second surface 68 of the base, the second surface 68 of the base being adjacent to the gripping part 600 (figure 4).

For example, the switch contact area 522 extends along a first surface 66 of the base, opposite to a second surface 68 of the base from which the gripping part extends.

The assembly can be arranged so that, a thumb of the user's hand can touch the switch contact area 522 while one or more other fingers of the user's same hand are touching the traction surface 602 at the same time (figure 5).

It is to be understood that the assembly is arranged so that, a thumb of user's hand can be in contact with the switch contact area while one or more other fingers of the user's same hand are in contact with the traction surface at the same time.

For example, the switch contact area 522 extends perpendicularly with respect to the traction surface 602 (figure 1).

The electronic switch subassembly 5 can comprise at least two switch elements 54a, 54b, 54c (figure 6).

The at least two switch elements 54a, 54b, 54c are facing downwards when the grip member 6 is attached to the external side of the vehicle door.

Each switch element 54a, 54b, 54c comprises one or more switch(es) 542a, 542b, 542c, 544a, 544b, 544c. The switch elements are arranged at different positions with respect to the switch contact area 522 so that a user's touch on the switch contact area 522 activates at least one of the switches.

For example, the at least three switch elements 54a, 54b, 54c can be arranged at different positions, with respect to the lower part of the gripping part and/or the base, so that a user's touch on the switch contact area 522 activates at least one of the at least three switches 542a, 542b, 542c, 544a, 544b, 544c.

For example, the at least three switch elements 54a, 54b, 54c can be arranged at different positions, with respect to the first surface of the base of the grip member, so that a user's touch on the switch contact area 522 activates at least one of the at least three switches 542a, 542b, 542c, 544a, 544b, 544c.

Due to the use of several switch elements arranged at different positions with respect to the switch contact area, the user is sure to activate the switch by touch without having to probe several areas of the door.

The switch subassembly 5 can comprise at least three such switch elements 54a, 54b, 54c, for instance the first switch element 54a, the second switch element 54b and a third switch element 54c. Each switch element can thus comprise one or more switch(es) 542a, 542b, 542c, 544a, 544b, 544c. The at least three switch elements 54a, 54b, 54c can be arranged at different positions, with respect to the contact surface area, so that a user's touch on the switch contact area 522 activates at least one of the at least three switches 542a, 542b, 542c, 544a, 544b, 544c.

Due to the use of three switch elements arranged at different positions with respect to the switch contact area, the user is even more sure to activate the switch by touch without having to probe several areas of the door.

Having such three switch elements so located allows for covering the switch contact area to ensure that activation is obtained upon touching the switch contact area.

The switch subassembly is for example activated when at least two of the switches 542a, 542b, 542c, 544a, 544b, 544c are activated. This reduces the risks for an incorrect activation.

Each switch element 54a, 54b, 54c comprises a first switch 542a, 542b, 542c and a second switch 544a, 544b, 544c. The switch subassembly is activated when, for instance only when at least one of the first switches 542a, 542b, 542c is activated and at least one of the second switches 544a, 544b, 544c is activated. This allows for increased reliability of the activation in that it limits unwanted activations or incorrect activations, for instance when one switch 54a, 54b, 54c is activated by mistake or when one of the first switches 542a, 542b, 542c or related circuit is damaged and activates by mistake while the second switches 544a, 544b, 544c and related circuit are functional, or one of the second switches 544a, 544b, 544c or related circuit is damaged and activates by mistake while the first switches 542a, 542b, 542c and related circuit are functional,

The first switch element 54a comprises the first first switch 542a and the first second switch 544a. The second switch element 54b comprises the second first switch 542b and the second second switch 544b. For example, the third switch element 54c comprises the third first switch 542c and the third second switch 544c. For example, activation can result from the first first switch 542a and the first second switch 544a being activated, but activation can also result from the first first switch 542a and the third second switch 544c being activated.

The first switches 542a, 542b, 542c and the second switches 544a, 544b, 544c can be configured such that the output signal sent by of each of the output signals of the first switches 542a, 542b, 542c when activated is inverted with respect to the output signal sent by each of the second switches 544a, 544b, 544c when activated. The first switches 542a, 542b, 542c and the second switches 544a, 544b, 544c can be configured such that the output signal sent by of each of the output signals of the first switches 542a, 542b, 542c when not activated is inverted with respect to the output signal sent by each of the second switches 544a, 544b, 544c when not activated. Therefore, the output signals of each of the first switches 542a, 542b, 542c are inverted to the output signals of the second switches 544a, 544b, 544c. This further reduces the risks of false activation of the subassembly as two different output signals are required.

For example, each of the first switches 542a, 542b, 542c sends an output signal, indicating an open signal by default, the corresponding circuit part being open, and only if the output signal indicates a closed state, the corresponding circuit part being closed, by instance so as to let the current pass or so as to form a short-circuit, the same first switch 542a, 542b, 542c is activated. For example, each of the second switches 544a, 544b, 544c sends an output signal, indicating a closed state by default, the corresponding circuit part being closed by default, by instance so as to let the current pass or so as to form a short-circuit, and only if the output signal indicates an open state, the corresponding circuit part being open, the same second switch 544a, 544b, 544c is activated.

The first switches 542a, 542b, 542c can for example be break contact switch(es) and/or a make contact switch(es). For example, each of the first switches 542a, 542b, 542c can be a break contact switch, or each of the first switches 542a, 542b, 542c can be a make contact switch(es). For example, each of the second switches 544a, 544b, 544c can be a break contact switch, or each of the first switches 544a, 544b, 544c can be a make contact switch. For example, each of the first switches 542a, 542b, 542c can be a break contact switch, and each of the second switches 544a, 544b, 544c can be a make contact switch. For example, each of the first switches 542a, 542b, 542c can be a make contact switch, and each of the second switches 544a, 544b, 544c can be a break contact switch.

As illustrated in figure 6, the electronic switch subassembly 5 comprises a first electrical subcircuit 562 connecting the first switches 542a, 542b, 542c together. The electronic switch subassembly 5 comprises a second electrical subcircuit 564 connecting the second switch elements 544a, 544b, 544c together. The first electrical subcircuit 562 being distinct from the second electrical subcircuit 564. This allows for further reduction of the risks of false activation of the subassembly, by strictly separating the functioning of the first switches and of the second switches.

For instance, the first electrical subcircuit 562 and second electrical subcircuit 564 are not electrically connected in the subassembly.

The switch subassembly 5 can comprise exactly the three switch elements 54a, 54b, 54c, each comprising the one or more switch(es) 542a, 542b, 542c, 544a, 544b, 544c, the exactly three switch elements 54a, 54b, 54c, being arranged at different positions with respect to the switch contact area so that a user's touch on the switch contact area 522 activates at least one of the switches 54a, 54b, 54c. This number of switch elements 54a, 54b, 54c, allows optimizing the result of having a switch contact area 522, which has a size dimensioned with respect to a human's hand, fully sensitive while limiting the number of components, and thus simplifying the fabrication and associated costs.

The at least two switch elements 54a, 54b, 54c can be activated by a user's touch on the switch contact area 522.

### Printed circuit board subassembly

The electronic switch subassembly 5 comprises a printed circuit board subassembly 56. The printed circuit board subassembly 56 comprising the at least two switch elements (figure 6), for example the at least three switch elements 54a, 54b, 54c. The printed circuit board subassembly 56 comprises the first electrical subcircuit 562 and the second electrical subcircuit 564 (figure 6).

The printed circuit board assembly comprises a printed circuit board 566. The printed circuit board 566 comprises the first electrical subcircuit 562 and the second electrical subcircuit 564, for instance the first electrical subcircuit 562 and the second electrical subcircuit 564 forming parts of the printed circuit(s) of the printed circuit board 566. The printed circuit board 566 presents the at least two switch elements, for example the at least three switch elements 54a, 54b, 54c, the at least three switch elements 54a, 54b, 54c being electrically connected to the printed circuit(s) of the printed circuit board 566, for instance by welding.

The printed circuit board subassembly 56, for instance the printed circuit board 566, comprise an upper face 567 and a lower face 568. The upper face 567 and the lower face 568 are opposite faces. The lower face 568 faces the switch contact area. The lower face 568 can present the first electrical subcircuit 562 and the second electrical subcircuit 564 at its surface. The lower face 568 can present the at least two switch elements, for example the at least three switch elements 54a, 54b, 54c.

For example, the lower face 568 of the printed circuit board subassembly is facing downwards when the grip member is attached to the vehicle door, and the upper face of the printed circuit board subassembly is facing upwards when the grip member is attached to the vehicle door.

### Grip member corresponding contact subcircuit

The switch elements 54a, 54b, 54c can be activated mechanically.

For example, the at least two switch elements 54a, 54b, 54c can be activated by a user's touch on the switch contact area 522

Alternatively, the grip member can comprises, for each switch element 54a, 54b, 54c, a corresponding contact subcircuit allowing activation of the one or more switch(es) of the switch element by a user's touch on the switch contact area 522, for instance on a corresponding part of the switch contact area 522.

The contact subcircuits can extend for example on a surface of the grip member facing downwards when the grip member is attached to the vehicle door.

For example, the contact subcircuits can extend on the first surface 66 of the base 60 of the grip member.

For example, the grip member comprises, for the first switch element 54a, a corresponding first contact subcircuit allowing activation of the first first switch 542a and/or of the first second switch 544a by a user's touch on the switch contact area 522. For example, the grip member comprises, for the second switch element 54b, a corresponding second contact subcircuit allowing activation of the second first switch 542b and/or of the second second switch 544b by a user's touch on the switch contact area 522. For example, the grip member comprises, for the third switch element 54c, a corresponding third contact subcircuit allowing activation of the third first switch 542c and/or of the third second switch 544c by a user's touch on the switch contact area 522.

The switch contact area 522 is for instance overmolded, or obtained by overmolding, for example over the grip member, for example over the edges of the surface of the base facing downwards when the grip member is attached to the vehicle door. This allows for a tight connection between the grip member and the switch contact area 522.

The grip member 52 or the switch contact area 522 can comprise or be made of elastic material(s), for example rubber.

For example, the switch contact area 522 comprises a membrane 522', for example made of elastic material (s), for example rubber.

### Light source subassembly

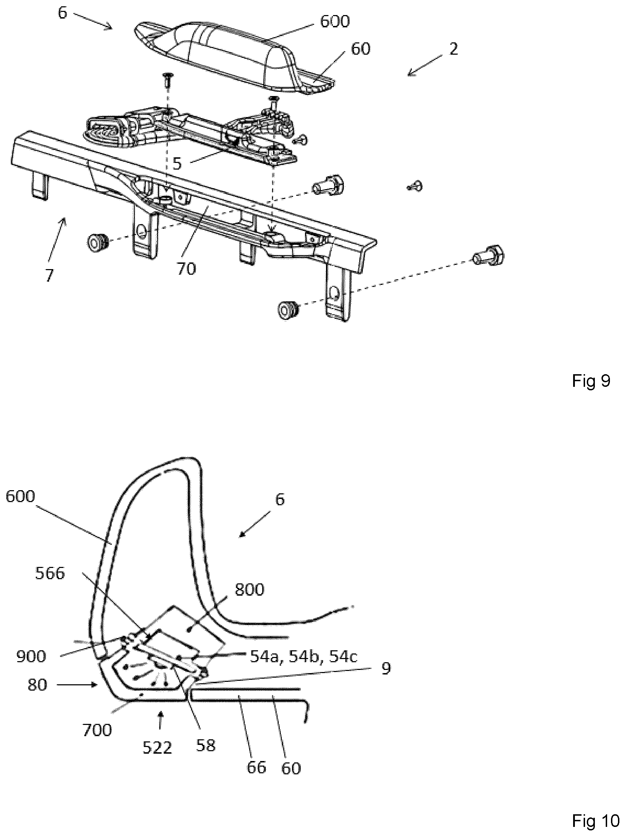

The assembly 2 can comprise a light source subassembly 8 comprising a light source 58 arranged so that at least part of the light source faces away from the vehicle door when the grip member is attached to the external side of the vehicle door (figure 10).

For example, the light source 58 is arranged so that the emitted light illuminate a path to be followed by the user's thumb so as to reach the switch contact area.

The light source 58 is for example located upstream the switch contact area 522 with respect to vehicle door.

For example, the light source 58 is arranged on the printed circuit board 566 of the electronic switch subassembly.

For example, the light source 58 is arranged on the upper face 567 of the printed circuit board 566.

For example, the printed circuit board 566 presents the first electrical subcircuit 562 and the second electrical subcircuit 564 at its surface, and/or a light source 58 at its surface.

For example, the light source 58 can comprise or be one or several light-emitting diode(s).

The light source subassembly comprises a window part 80 that is at least partially transparent, for example transparent, to the light emitted by the light source 58.

The window part 80 is for example located upstream the switch contact area 522 with respect to vehicle door.

For example, the window part 80 is arranged on the base 60 and/or on a lower part of the grip member 600.

For example, the window part 80 is arranged at an intersection area between the base 60 and the gripping part 600.

According to a first embodiment, the grip member 6 can comprises an aperture 9 (fig. 1) configured to receive at least a part of the window part 90.

For example, the aperture is arranged on the base and/or on a lower part of the grip member.

For example, the window part 80 can be received in the aperture 9 (fig. 4) and fixed to the grip member by means of clipping means.

According to an embodiment of the invention, the electronic switch subassembly 5 and the light source subassembly 8 are combined.

To this end, for example, the switch contact area 522 and the window part 80 form a unique element 700 as illustrated in figure 10.

Said unique element 700 extends for example along a surface 66 of the base 60 and a surface of the lower part of the gripping part 600 facing downwards when the grip member is attached to the external side of the vehicle door and is at least partially transparent, for example transparent to the light source 58.

The grip member 6 can comprise an aperture 9 configured to receive at least a part of said unique element 700. For example, said aperture 9 is arranged on the base and on a lower part of the grip member. For example, said unique element 700 can be received in the aperture 9.

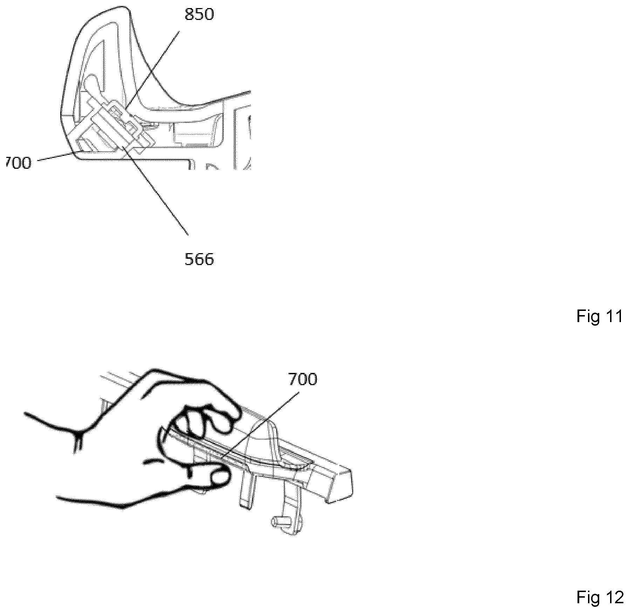

Said unique element 700 forming the switch contact area and the window part can be sealed to an inner casing 800 comprising an abutment element 850 (fig. 11). The unique element 700 and the inner casing 800 form a housing receiving the printed circuit board 566.

For example, the printed circuit board 566 can be, fixed to the unique element 700.

According to this embodiment, the at least two switch elements 54a, 54b, 54c are facing upward when the grip member 6 is attached to the external side of the vehicle door.

According to this embodiment, the light source 58 is arranged on the lower face 568 of the printed circuit board 566 and the upper face 567 can present the at least two switch element 54a, 54b, 54c.

A contact zone between said unique element and the inner casing is sealed, by a sealing means 900 configured so as to allow a displacement of the unique element 700 with respect to the inner casing 800. For example the sealing means comprise a rubber gasket.

The displacement of the unique element 700 is intended to displace the printed circuit board 566 so that the at least two switch elements 54a, 54b, 54c come into contact with the abutment element 850 of the inner casing 800 so as to be activated.

The displacement of the unique element 700 can be realized by applying pressure, for example by pushing on the unique element for example, by means of a user's thumb (fig. 12).

### Frame

The electronic switch subassembly 5 can comprises a frame 500.

The frame 500 is configured to attach the switch contact area 522 to the grip member 6.

For example, the frame 500 can be fixed to the membrane of the switch contact area.

For example, the frame 500 can be fixed to a surface of the membrane 522' facing downwards when the grip member is attached to the vehicle door (fig. 4).

For example, the frame 500 can be fixed to a surface of the membrane 522' facing upwards when the grip member is attached to the vehicle door (fig. 9).

For example, the switch contact area 522 is for instance overmoulded, or obtained by overmolding, for example over the frame 500, for example so as to be surrounded by peripheral walls of the frame 500.

The frame 500 can be a rigid frame 500.

The frame 500 and the switch contact area 522, for example the membrane 522' of the switch contact area 522 are arrange so as to form an inner space dimensioned to receive the printed circuit board assembly 56.

When the electronic switch subassembly 5 is attached to the grip member 6, the printed circuit board assembly 56 is arranged between the switch contact area 522 and the grip member 6.

The printed circuit board subassembly 56 comprising the at least two switches is arranged between the switch contact area and the grip member.

To this end, the frame 500 can be configured to be fixed to the grip member 6.

For example, the frame 500 is configured to be fixed to a surface of the grip member 6 facing downwards when the grip member 6 is attached to the vehicle door 4.

For example, the frame 500 is configured to be fixed to a lower part of the gripping part and/or the base of the grip member when the grip member 6 is attached to the vehicle door 4.

For example, the frame 500 is configured to be fixed to a surface of the lower part of the gripping part and/or a surface of the base of the grip member facing downwards when the grip member 6 is attached to the vehicle door 4.

For example, the frame 500 is configured to be fixed to the first surface 66 of the base 60 of the grip member 6.

A contact zone 5352 between the frame 500 and the grip member (fig. 3) is sealed, for example by laser welding, to form a waterproof seal. This allows for a protection of the printed circuit board subassembly 56.

### Electrical connection means

The electronic switch subassembly 5 can comprise electrical connection means 57 for electrically connecting the printed circuit board assembly 56 to the electrical latch.

The electrical connection means 57 comprise one or several electrical wire(s), for example a cable surrounding the wire(s), the electrical wire(s) being provided with connections at their both ends.

### Fixation element

The assembly can comprise a fixation element 7 (figure 9) configured to be attached to the vehicle door 4.

For example, the fixation element 7 is configured to be attached to an inner side of the vehicle door.

The fixation element 7 can comprises an aperture 70 arranged in the fixation element so as to allow access to the switch contact area 522 by the user's hand thumb.

For example, the aperture 70 opens to the external side 44 of the vehicle door when the fixation element is attached to the inner side of the vehicle door.

For example, the aperture 70 is arrange so as to receive at least a part of the window part 80 of the light source subassembly 8.

### Vehicle door

A vehicle door 4 is described.

The vehicle door 4 comprises the assembly for opening and/or closing a vehicle door hereabove and a belt line 46 from which can extend a window glass.

The beltline 46 is a line representing the bottom edge of a vehicle's glass panels.

The grip member 6, to which the electronic switch subassembly 5 is attached, is for example attached to an external side 44 of the vehicle door, for example at the belt line 46.

The grip member 6, to which the electronic switch subassembly 5 is attached, is for example arranged at the belt line 46, for example between a window glass 48 and an end portion 49 of the vehicle door 4.

The term « end portion of the vehicle door » means a portion comprising an edge of the vehicle door, a free end 49' of the vehicle door.

### Method for opening

A method for opening a vehicle door 4 by means of the assembly 2 is described. The method comprises the activation of the at least one electronic switch subassembly 5 by a user's touch so as to send a signal to an electronic latch to open the door 4. The activation of the at least one electronic switch subassembly 5 comprises, in response to a user's touch on the switch contact area 522, a step of activation of at least one of the switches 542a, 542b, 542c, 544a, 544b, 544c, for instance as described hereabove.

The signal to an electronic latch to open the door 4 can also comprise a signal to unlock the door 4.

### Method for obtaining a subassembly

A method for obtaining the subassembly 5 is described. The method comprises assembling the frame 500, the switch contact area 522 and the printed circuit board assembly 56.

### Method for mounting

A method for mounting the assembly on a vehicle door is described.

The method comprises assembling the electronic switch subassembly 5 to the grip member 6

For example, the method can comprise the sealing of the contact zone 5352 between the frame and the grip member 6, for example by laser welding, to form a waterproof seal.

The method comprises arranging at least a part of the assembled electronic switch subassembly 522 and grip member 6 in the aperture 70 of the fixation element 7.

The method comprises attaching the fixation element 7 to the vehicle door 4.

According to a first embodiment of the invention illustrated in figure 9 and 13 to 16, the method comprises a first step of assembling the electronic switch subassembly 5 to the grip member 6.

The method can comprise the sealing of the contact zone 5352 between the frame and the grip member 6, for example by laser welding, to form a waterproof seal.

The method comprises a second step of arranging at least a part of the assembled electronic switch subassembly 5 and grip member 6 in the aperture 70 of the fixation element 7.

The electronic switch subassembly 5 and grip member 6 can be fixed to the fixation element 7 for example, by means of fixation means, such as screws, or by means of rigid clips or by gluing or by welding.

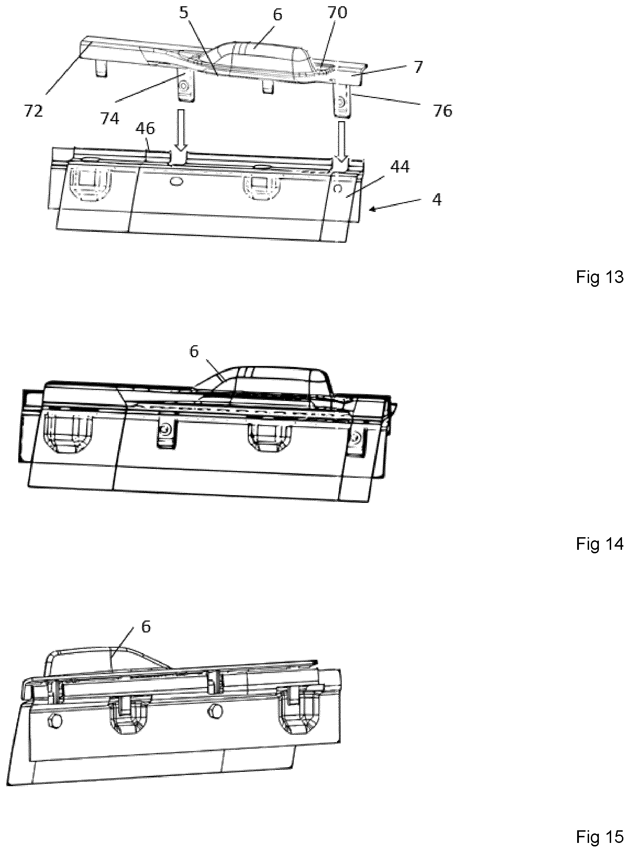

The method comprises a third step of attaching the fixation element 7 to the vehicle door 4, for example, from an external side of the vehicle door (fig. 13, 14).

For example, a part of the fixation element 7 is attached to an inner side of the vehicle door. For example, said part is at least one leg 74, 76, for example two legs 74, 76 extending from a base 72 of the fixation element.

For example, the method comprises a step of arranging said at least one leg 74, 76 of the fixation element, from an external side of the vehicle door, to an inner side of the vehicle door, for example through holes 44, 46 arranged in a door panel of the vehicle door 4.

Said at least one leg 74, 76 can be attached to the inner side of the vehicle door for example, by means of fixation means, such as screws.

For example, said at least one leg is attached to the inner side of a vehicle door by means of a screw, screwed along a direction perpendicular with respect to the vehicle door.

According to a variant, the method comprises a step wherein each of the two legs 74, 76 is attached to the inner side of a vehicle door by means of a screw, screwed along a direction perpendicular with respect to the vehicle door (fig. 15).

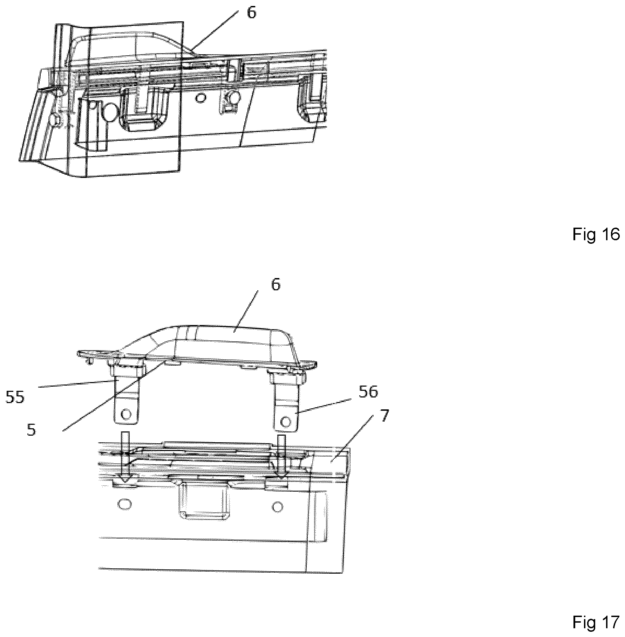

According to a variant, the method comprises a step wherein one of the leg 74 is attached to the inner side of a vehicle door by means of a screw, screwed along a direction perpendicular with respect to the vehicle door and the other leg 76 is attached to the inner side of a vehicle door by means of a screw, screwed along a direction parallel with respect to the vehicle door (fig. 16).

The second step can be performed after the first step, and the third step can be performed after the second step.

According to a variant, the third step can be performed after the first step and before the second step.

According to second embodiment of the method mounting illustrated in figures 17 to 20, the method comprises a first step of attaching or assembling the fixation element 7 to the vehicle door 4.

For example, the fixation element 7 is attached to an inner side of the vehicle door.

The fixation element 7 can be attached to the vehicle door by means of fixation means, such as screws.

The method comprises a second step of assembling the electronic switch subassembly 5 to the grip member 6.

The method comprises the sealing of the contact zone 5352 between the frame and the grip member 6, for example by laser welding, to form a waterproof seal.

The method comprises a third step of arranging at least a part of the electronic switch subassembly 5 and grip member 6 in the aperture 70 of the fixation element 7, attached to the vehicle door.

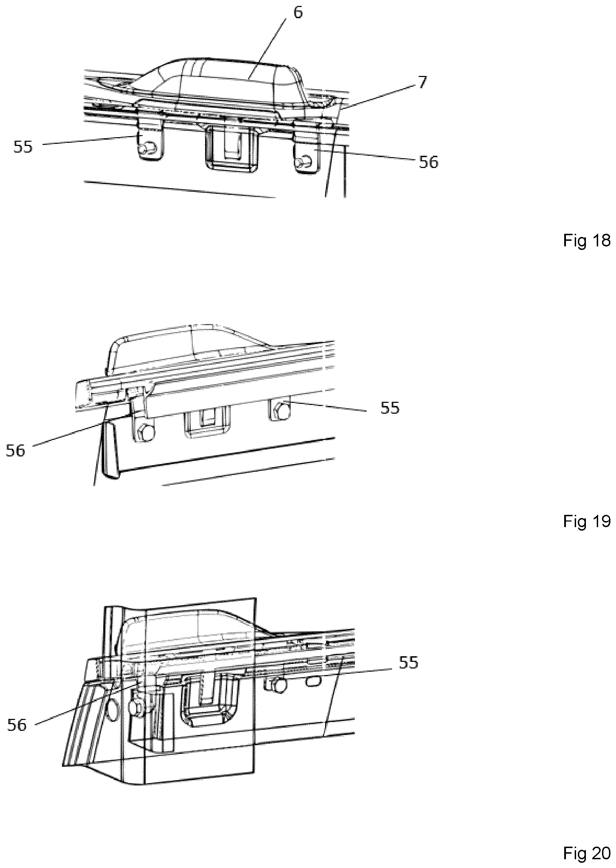

The method comprises a step of arranging at least one leg 55, 56, for example two legs 55, 56 extending from the electronic switch subassembly 5 and/or the grip member 6, from an external side of the vehicle door, to an inner side of the vehicle door, for example through holes arranged in the fixation element 70 (figures 17 and 18).

The at least one legs 55, 56 can be attached to the inner side of the vehicle door for example, by means of fixation means, such as screws.

The method comprises a step wherein at least one leg 55, 56 is attached to the inner side of a vehicle door by means of a screw, screwed along a direction perpendicular with respect to the vehicle door.

According to a variant illustrated in figure 19, the method comprises a step wherein each of the two legs 55, 56 is attached to the inner side of a vehicle door by means of a screw, screwed along a direction perpendicular with respect to the vehicle door.

According to a variant illustrated in figure 20, the method comprises a step wherein one of the leg 55 is attached to the inner side of a vehicle door by means of a screw, screwed along a direction perpendicular with respect to the vehicle door and the other leg 56 is attached to the inner side of a vehicle door by means of a screw, screwed along a direction parallel with respect to the vehicle door.

## Claims

1. Assembly (2) for opening and/or closing a vehicle door, the assembly (2) comprising:
- a grip member (6) configured to be attached to an external side (44) of a vehicle door (4), the grip member (6) comprising:
∘ a base (60) configured to extend from the vehicle door when the grip member is attached to the external side of the vehicle door,
∘ a gripping part (600) extending from the base (60), and toward an upper direction when the grip member (6) is attached to the external side of the vehicle door,
- an electronic switch subassembly (5) configured to be attached to the grip member (6) and configured to be activated by a user's touch so as to send a signal to an electronic latch to open the door (4), the electronic switch subassembly (5) comprising a switch contact area (522), facing downwards when the grip member (6) is attached to the external side of the vehicle door,
**characterised in that**
the gripping part (600) comprises a traction surface (602) configured to allow exerting a traction on the grip member (6) so as to pull on the vehicle door (4), the traction surface (602) facing the vehicle door (4) when the grip member (6) is attached to the external side of the vehicle door (4) and wherein the assembly (1) is arranged so that, a thumb of user's hand can touch the switch contact area (522) while one or more other fingers of the user's same hand are touching the traction surface (602) at the same time.

2. Assembly (2) for opening and/or closing a vehicle door according to claim 1 wherein the assembly (2) comprises a light source subassembly (8) comprising a light source (58) arranged so that at least part of the light source faces away from the vehicle door when the grip member (6) is attached to the external side of the vehicle door.

3. Assembly (2) for opening and/or closing a vehicle door according to claim 2 wherein the light source subassembly (58) comprises a window part (80) that is at least partially transparent, for example transparent, to the light emitted by the light source (58), the window part (80) being arranged on the base (60) and/or on a lower part of the grip member (600).

4. Assembly (2) for opening and/or closing a vehicle door according to any of the preceding claims wherein the electronic switch subassembly (5) comprises at least two switch elements (54a, 54b, 54c), each switch element (54a, 54b, 54c) comprising one or more switch(es) (542a, 542b, 542c, 544a, 544b, 544c), the switch elements being arranged at different positions with respect to the switch contact area (522) so that a user's touch on the switch contact area (522) activates at least one of the switches.

5. Assembly (2) for opening and/or closing a vehicle door according to the preceding claim wherein each switch element (54a, 54b, 54c) comprises a first switch (542a, 542b, 542c) and a second switch (544a, 544b, 544c), the switch subassembly being activated when:
- at least one of the first switches (542a, 542b, 542c) is activated and
- at least one of the second switches (544a, 544b, 544c) is activated.

6. Assembly (2) for opening and/or closing a vehicle door according to claim 4 or 5 wherein the first switches (542a, 542b, 542c) and the second switches (544a, 544b, 544c) are configured such that the output signal sent by of each of the output signals of the first switches (542a, 542b, 542c) when activated is inverted with respect to the output signal sent by each of the second switches (544a, 544b, 544c) when activated.

7. Assembly (2) for opening and/or closing a vehicle door according to claim 5 or 6 wherein the electric switch subassembly (5) comprises a first electrical subcircuit (562) connecting the first switches (542a, 542b, 542c) together, and a second electrical subcircuit (564) connecting the second switch elements (544a, 544b, 544c) together, the first electrical subcircuit (562) being distinct from the second electrical subcircuit (564).

8. Assembly (2) for opening and/or closing a vehicle door according to claim 7 comprising a frame (500) configured to cooperate with the switch contact area (522) so as to define an inner space wherein the at least two switch elements (54a, 54b, 54c) are arranged.

9. Assembly (2) for opening and/or closing a vehicle door according to claim 8 wherein the frame (500) is fixed to the grip member (6) and wherein a contact zone (5352) between the frame (500) and the grip member (6) is sealed by laser welding to form a waterproof seal.

10. Assembly (2) for opening and/or closing a vehicle door according to any of the preceding claims comprising a fixation element (7) configured to be attached to the vehicle door, wherein an aperture (70) is arranged in the fixation element (7) so as to allow access to the switch contact area (522) by the user's hand thumb.

11. Vehicle door (4) comprising:
- the assembly for opening and/or closing a vehicle door according to any of the preceding claims,
- a belt line (46) from which can extend a window glass (48).

12. Vehicle door (4) according to claim 11 wherein the grip member (6) is attached to an external side of the vehicle door (44), at the belt line (46).

13. Method for mounting an assembly according to claim 10 on a vehicle door, the method comprising:
- assembling the electronic switch subassembly (5) to the grip member (6)
- arranging at least a part of the assembled electronic switch subassembly (5) and grip member (6) in the aperture (70) of the fixation element (7), and
- attaching the fixation element (7) to the vehicle door (4).

## Patentansprüche

1. Anordnung (2) zum Öffnen und/oder Schließen einer Fahrzeugtür, wobei die Anordnung (2) umfasst:
- ein Griffelement (6), das konfiguriert ist, um an einer Außenseite (44) einer Fahrzeugtür (4) befestigt zu werden, wobei das Griffelement (6) umfasst:
∘ eine Basis (60), die konfiguriert ist, um sich von der Fahrzeugtür zu erstrecken, wenn das Griffelement an der Außenseite der Fahrzeugtür befestigt ist,
∘ ein Greifteil (600), das sich von der Basis (60) und in eine obere Richtung erstreckt, wenn das Griffelement (6) an der Außenseite der Fahrzeugtür befestigt ist,
- eine elektronische Schalter-Unteranordnung (5), die konfiguriert ist, um an dem Griffelement (6) befestigt zu werden, und konfiguriert ist, um durch eine Berührung eines Benutzers aktiviert zu werden, um ein Signal an einen elektronischen Riegel zu senden, um die Tür (4) zu öffnen, wobei die elektronische Schalter-Unteranordnung (5) einen Schalter-Kontaktbereich (522) umfasst, der nach unten gewandt ist, wenn das Griffelement (6) an der Außenseite der Fahrzeugtür befestigt ist,
**dadurch gekennzeichnet, dass** das Greifteil (600) eine Zugoberfläche (602) umfasst, die konfiguriert ist, um Ausüben eines Zugs auf das Griffelement (6) zu ermöglichen, um an der Fahrzeugtür (4) zu ziehen, wobei die Zugoberfläche (602) der Fahrzeugtür (4) zugewandt ist, wenn das Griffelement (6) an der Außenseite der Fahrzeugtür (4) befestigt ist und wobei die Anordnung (1) angeordnet ist, sodass ein Daumen der Hand des Benutzers den Schalter-Kontaktbereich (522) berühren kann, während gleichzeitig ein oder mehrere andere Finger derselben Hand des Benutzers die Zugoberfläche (602) berühren.

2. Anordnung (2) zum Öffnen und/oder Schließen einer Fahrzeugtür nach Anspruch 1, wobei die Anordnung (2) eine Lichtquellen-Unteranordnung (8) umfasst, die eine Lichtquelle (58) umfasst, die angeordnet ist, sodass mindestens ein Teil der Lichtquelle von der Fahrzeugtür abgewandt ist, wenn das Griffelement (6) an der Außenseite der Fahrzeugtür befestigt ist.

3. Anordnung (2) zum Öffnen und/oder Schließen einer Fahrzeugtür nach Anspruch 2, wobei die Lichtquellen-Unteranordnung (58) ein Fensterteil (80) umfasst, das mindestens teilweise transparent, beispielsweise transparent, für das von der Lichtquelle (58) emittierte Licht ist, wobei das Fensterteil (80) auf der Basis (60) und/oder auf einem unteren Teil des Greifelements (600) angeordnet ist.

4. Anordnung (2) zum Öffnen und/oder Schließen einer Fahrzeugtür nach einem der vorstehenden Ansprüche, wobei die elektronische Schalter-Unteranordnung (5) mindestens zwei Schaltelemente (54a, 54b, 54c) umfasst, wobei jedes Schaltelement (54a, 54b, 54c) einen oder mehrere Schalter (542a, 542b, 542c, 544a, 544b, 544c) umfasst, wobei die Schaltelemente in Bezug auf den Schalter-Kontaktbereich (522) an unterschiedlichen Positionen angeordnet sind, sodass eine Berührung des Schalter-Kontaktbereich (522) durch einen Benutzer mindestens einen der Schalter aktiviert.

5. Anordnung (2) zum Öffnen und/oder Schließen einer Fahrzeugtür nach dem vorstehenden Anspruch, wobei jedes Schaltelement (54a, 54b, 54c) einen ersten Schalter (542a, 542b, 542c) und einen zweiten Schalter (544a, 544b, 544c) umfasst, wobei die Schalter-Unteranordnung aktiviert wird, wenn:
- mindestens einer der ersten Schalter (542a, 542b, 542c) aktiviert ist und
- mindestens einer der zweiten Schalter (544a, 544b, 544c) aktiviert wird.

6. Anordnung (2) zum Öffnen und/oder Schließen einer Fahrzeugtür nach Anspruch 4 oder 5, wobei die ersten Schalter (542a, 542b, 542c) und die zweiten Schalter (544a, 544b), 544c) konfiguriert sind, sodass das von jedem der Ausgangssignale der ersten Schalter (542a, 542b, 542c) gesendete Ausgangssignal bei Aktivierung in Bezug auf das von jedem der zweiten Schalter (544a, 544b, 544c) gesendete Ausgangssignal bei Aktivierung invertiert ist.

7. Anordnung (2) zum Öffnen und/oder Schließen einer Fahrzeugtür nach Anspruch 5 oder 6, wobei die elektrische Schalter-Unteranordnung (5) einen ersten elektrischen Teilstromkreis (562) umfasst, der die ersten Schalter (542a, 542b, 542c) miteinander verbindet, und einen zweiten elektrischen Teilstromkreis (564), der die zweiten Schaltelemente (544a, 544b, 544c) miteinander verbindet, wobei sich der erste elektrische Teilstromkreis (562) vom zweiten elektrischen Teilstromkreis (564) unterscheidet.

8. Anordnung (2) zum Öffnen und/oder Schließen einer Fahrzeugtür nach Anspruch 7, umfassend einen Rahmen (500), der konfiguriert ist, um mit dem Schalter-Kontaktbereich (522) zusammenzuwirken, um einen Innenraum zu definieren, in dem die mindestens zwei Schalterelemente (54a, 54b, 54c) angeordnet sind.

9. Anordnung (2) zum Öffnen und/oder Schließen einer Fahrzeugtür nach Anspruch 8, wobei der Rahmen (500) am Griffelement (6) fixiert ist und wobei eine Kontaktzone (5352) zwischen dem Rahmen (500) und dem Griffelement (6) durch Laserschweißen abgedichtet ist, um eine wasserdichte Abdichtung zu bilden.

10. Anordnung (2) zum Öffnen und/oder Schließen einer Fahrzeugtür nach einem der vorstehenden Ansprüche, umfassend ein Fixierelement (7), das konfiguriert ist, um an der Fahrzeugtür befestigt zu werden, wobei eine Öffnung (70) in dem Fixierelement (7) angeordnet ist, um den Zugang zum Schalter-Kontaktbereich (522) durch den Daumen der Hand des Benutzers zu ermöglichen.

11. Fahrzeugtür (4), umfassend:
- die Anordnung zum Öffnen und/oder Schließen einer Fahrzeugtür nach einem der vorstehenden Ansprüche,
- eine Gürtellinie (46), aus der sich ein Fensterglas (48) erstrecken kann.

12. Fahrzeugtür (4) nach Anspruch 11, wobei das Griffelement (6) an einer Außenseite der Fahrzeugtür (44) an der Gürtellinie (46) befestigt ist.

13. Verfahren zum Montieren einer Anordnung nach Anspruch 10 an einer Fahrzeugtür, wobei das Verfahren umfasst:
- Zusammensetzen der elektronischen Schalter-Unteranordnung (5) mit dem Griffelement (6)
- Anordnen mindestens eines Teils der zusammengesetzten elektronischen Schalterunteranordnung (5) und Griffelements (6) in der Öffnung (70) des Fixierelements (7), und
- Befestigen des Fixierelements (7) an der Fahrzeugtür (4).

## Revendications

1. Ensemble (2) pour ouvrir et/ou fermer une portière de véhicule, l'ensemble (2) comprenant :
- un élément de préhension (6) configuré pour être attaché à un côté externe (44) d'une portière de véhicule (4), l'élément de préhension (6) comprenant :
∘ une base (60) configurée pour s'étendre depuis la portière de véhicule lorsque l'élément de préhension est attaché au côté externe de la portière de véhicule,
∘ une partie de préhension (600) s'étendant depuis la base (60) et vers une direction supérieure lorsque l'élément de préhension (6) est attaché au côté externe de la portière de véhicule,
- un sous-ensemble de commutateur électronique (5) configuré pour être attaché à l'élément de préhension (6) et configuré pour être activé par le toucher d'un utilisateur afin d'envoyer un signal à un verrou électronique pour ouvrir la portière (4), le sous-ensemble de commutateur électronique (5) comprenant une zone de contact de commutateur (522), orientée vers le bas lorsque l'élément de préhension (6) est attaché au côté externe de la portière de véhicule,
**caractérisé en ce que**
la partie de préhension (600) comprend une surface de traction (602) configurée pour permettre d'exercer une traction sur l'élément de préhension (6) de manière à tirer sur la portière de véhicule (4), la surface de traction (602) faisant face à la portière de véhicule (4) lorsque l'élément de préhension (6) est attaché au côté externe de la portière de véhicule (4) et où l'ensemble (1) est agencé de sorte qu'un pouce de la main de l'utilisateur puisse toucher la zone de contact de commutateur (522) tandis qu'un ou plusieurs autres doigts de la même main de l'utilisateur touchent la surface de traction (602) simultanément.

2. Ensemble (2) pour ouvrir et/ou fermer une portière de véhicule selon la revendication 1, dans lequel l'ensemble (2) comprend un sous-ensemble de source de lumière (8) comprenant une source de lumière (58) agencée de sorte qu'au moins une partie de la source de lumière soit orientée à l'opposé de la portière de véhicule lorsque l'élément de préhension (6) est attaché au côté externe de la portière de véhicule.

3. Ensemble (2) pour ouvrir et/ou fermer une portière de véhicule selon la revendication 2, dans lequel le sous-ensemble de source de lumière (58) comprend une partie de fenêtre (80) qui est au moins partiellement transparente, par exemple transparente, à la lumière émise par la source de lumière (58), la partie de fenêtre (80) étant agencée sur la base (60) et/ou sur une partie inférieure de l'élément de préhension (600).

4. Ensemble (2) pour ouvrir et/ou fermer une portière de véhicule selon l'une quelconque des revendications précédentes, dans lequel le sous-ensemble de commutateur électronique (5) comprend au moins deux éléments de commutateurs (54a, 54b, 54c), chaque élément de commutateur (54a, 54b, 54c) comprenant un ou plusieurs commutateur(s) (542a, 542b, 542c, 544a, 544b, 544c), les éléments de commutateurs étant agencés à des positions différentes par rapport à la zone de contact de commutateur (522) de sorte qu'un toucher de l'utilisateur sur la zone de contact de commutateur (522) active au moins l'un des commutateurs.

5. Ensemble (2) pour ouvrir et/ou fermer une portière de véhicule selon la revendication précédente, dans lequel chaque élément de commutateur (54a, 54b, 54c) comprend un premier commutateur (542a, 542b, 542c) et un deuxième commutateur (544a, 544b, 544c), le sous-ensemble de commutateur étant activé lorsque :
- au moins l'un des premiers commutateurs (542a, 542b, 542c) est activé et
- au moins l'un des deuxièmes commutateurs (544a, 544b, 544c) est activé.

6. Ensemble (2) pour ouvrir et/ou fermer une portière de véhicule selon la revendication 4 ou 5, dans lequel les premiers commutateurs (542a, 542b, 542c) et les deuxièmes commutateurs (544a, 544b, 544c) sont configurés de sorte que le signal de sortie envoyé par chacun des signaux de sortie des premiers commutateurs (542a, 542b, 542c) lorsqu'activés soit inversé par rapport au signal de sortie envoyé par chacun des deuxièmes commutateurs (544a, 544b, 544c) lorsqu'activés.

7. Ensemble (2) pour ouvrir et/ou fermer une portière de véhicule selon la revendication 5 ou 6, dans lequel le sous-ensemble de commutateur électrique (5) comprend un premier sous-circuit électrique (562) reliant les premiers commutateurs (542a, 542b, 542c) ensemble, et un deuxième sous-circuit électrique (564) reliant les deuxièmes éléments de commutateurs (544a, 544b, 544c) ensemble, le premier sous-circuit électrique (562) étant distinct du deuxième sous-circuit électrique (564).

8. Ensemble (2) pour ouvrir et/ou fermer une portière de véhicule selon la revendication 7, comprenant un cadre (500) configuré pour coopérer avec la zone de contact de commutateur (522) de manière à définir un espace interne dans lequel les au moins deux éléments de commutateurs (54a, 54b, 54c) sont agencés.

9. Ensemble (2) pour ouvrir et/ou fermer une portière de véhicule selon la revendication 8, dans lequel le cadre (500) est fixé à l'élément de préhension (6) et dans lequel une zone de contact (5352) entre le cadre (500) et l'élément de préhension (6) est scellée par soudage au laser afin de former un joint étanche.

10. Ensemble (2) pour ouvrir et/ou fermer une portière de véhicule selon l'une quelconque des revendications précédentes, comprenant un élément de fixation (7) configuré pour être attaché à la portière de véhicule, où une ouverture (70) est agencée dans l'élément de fixation (7) de manière à permettre l'accès à la zone de contact de commutateur (522) par le pouce de la main de l'utilisateur.

11. Portière de véhicule (4) comprenant :
- l'ensemble pour ouvrir et/ou fermer une portière de véhicule selon l'une quelconque des revendications précédentes,
- une ceinture de caisse (46) à partir de laquelle peut s'étendre une vitre (48).

12. Portière de véhicule (4) selon la revendication 11, dans laquelle l'élément de préhension (6) est attaché à un côté externe de la portière de véhicule (44), au niveau de la ceinture de caisse (46).

13. Procédé de montage d'un ensemble selon la revendication 10 sur une portière de véhicule, le procédé comprenant :
- l'assemblage du sous-ensemble de commutateur électronique (5) à l'élément de préhension (6)
- l'agencement d'au moins une partie du sous-ensemble de commutateur électronique (5) et de l'élément de préhension (6) assemblés, dans l'ouverture (70) de l'élément de fixation (7), et
- la fixation de l'élément de fixation (7) à la portière de véhicule (4).
